# EUROPEAN PATENT SPECIFICATION

(11) **EP 1 663 643 B1**
(45) Date of publication and mention of the grant of the patent: **19.08.2009**
(21) Application number: 04770782.3
(22) Date of filing: 08.09.2004
(51) Int. Cl.: B32B 29/06

(54) **COMPOSITE PAPER SHEET MATERIAL AND METHOD FOR PRODUCTION THEREOF**
VERBUNDPAPIERFLACHMATERIAL UND HERSTELLUNGSVERFAHREN DAFÜR
FEUILLE DE PAPIER COMPOSITE ET PROCEDE DE PRODUCTION DE CELLE-CI

(30) Priority: 12.09.2003 IT FI20030239
(43) Date of publication of application: 07.06.2006
(73) Proprietor: FABIO PERINI S.p.A., 55100 Lucca (IT)
(72) Inventor: NENCIONI, Giovanni, I-56019 Vecchiano, Pisa (IT); GELLI, Mauro, I-55066 Capannori (Lucca) (IT)
(74) Representative: Mannucci, Michele
(86) International application number: PCT/IT2004/000483
(87) International publication number: WO 2005/025866

(56) References cited:
- EP-A- 0 988 967
- WO-A-93/00219
- WO-A-03/043812
- WO-A-03/053313
- GB-A- 2 255 745

## Description

### TECHNICAL FIELD

The present invention relates to a sheet of composite paper material, in particular to a sheet constituted by at least two plies and preferably by at least three plies of tissue paper.

The invention also relates to a method or process to produce a material of this type.

### STATE OF THE ART

In the production of disposable products based on tissue paper, in particular napkins, rolls of toilet paper, rolls of kitchen towels and the like, there is a tendency to produce increasingly complex products with better and better technical-functional and aesthetic characteristics.

WO-A-03043812 describes a paper handkerchief constituted by three layers superimposed on and glued to each other. The two outer layers are embossed with a pattern constituted by straight lines inclined with respect to the edge of the napkin and orthogonal with one another. An inner ply printed with a decorative pattern is interposed between the two outer plies. The outer plies are glued to the inner ply by a colored glue. This produces a product with the appearance of a textile product, where the embossing lines on the two outer plies simulate the weft and warp lines of the fabric, while the pattern printed on the inner sheet shines through the outer plies and simulates a decoration obtained by embroidery or the like on a woven product.

US-A-6221211 describes a paper product with several plies, wherein the inner ply is provided with a printed decoration that shines through the outer layers. The main object of this decoration is to indicate the presence of particular ingredients in the products, which is indicated in particular for hygiene purposes such as facial cleansing and the like.

GB-A-2,255,745 describes a paper product in two plies, wherein the upper layer is embossed and glued with a colored glue to the second ply. A third outer ply, also embossed and glued to the intermediate ply, may also be provided.

GB-A-2,293,573 describes a sheet material particularly suitable to produce baby diapers. It comprises two layers coupled to each other, the outer layer of which is partially opaque and partially transparent. The second layer has a different coloring from the first layer and is visible therethrough at the level of the transparent areas. Decorative images are produced on the second layer.

EP-A-0684132 describes a multi-ply paper product and a respective production method. Two plies are glued together and subsequently embossed.

US-A-5,339,730 describes a procedure to print and emboss a multi-ply web material. An ink is applied to the protuberances produced by embossing on one of the two plies, to produce a pattern that is visible through the second layer superimposed on and glued to the first.

US-A-3,738,905 describes a method for producing an embossed web material, wherein two plies of tissue paper are embossed separately from each other by embossing rollers provided with linear ribbings. A product is obtained wherein the two plies are embossed according to lines inclined with respect to each other and inclined with respect to the machine direction, that is, with respect to the longitudinal edge of the web material obtained. The two plies are coupled to each other in the area in which the embossing line crosses over on the two plies.

GB-A-1,128,722 describes a web material decorated by a print visible through the outer paper ply, which is partially transparent.

As is apparent from the prior art documents referred to above, great efforts have been made by the manufacturers of this type of product to implement production methods that give rise to a product which is not only efficient from the functional viewpoint but also aesthetically pleasing.

### OBJECTS AND SUMMARY OF THE INVENTION

The object of the present invention is to implement a procedure to produce a product in sheet form, in particular made of multi-ply tissue paper, which has particular aesthetic and functional characteristics, superior to those of traditional products.

The object of the present invention is also to produce a product or multi-ply paper material of the aforesaid type, with particularly appreciable technical-functional and aesthetic characteristics.

Essentially, according to a first aspect the invention relates to a paper material in sheet form comprising at least a first ply and at least a second ply coupled to each other by means of a glue, wherein the first ply has embossing according to essentially continuous or discontinuous lines, that is, constituted by alignments of protuberances along at least a series of lines which are preferably inclined with respect to a longitudinal edge of the material and the second ply is printed with a decorative, motif visible in transparency through the first ply. According to the invention, a product of this type (per se known from WO-A-03043812) is improved by the fact that the decorative pattern printed on the second ply is constituted by a design simulating a relief three-dimensional appearance, characterized by shading. For example, the decorative pattern may be the two-dimensional reproduction of embossing with shading simulating the three-dimensionality typical of embossing obtained by deformation of the web material by forming protuberances that project from the original plane of the ply.

The embossed ply, superimposed on the ply with the three-dimensional printing and through which said printing is visible in transparency, may be embossed with continuous or essentially continuous lines (preferably straight), in relief, or may be embossed according to discontinuous lines, that is alignments of individual protuberances, aligned at least according to lines, preferably straight and inclined with respect to the edge of the product.

Superimposition of the two plies thus produced and decorated gives rise to a product with a particularly pleasing appearance, as it simulates a woven fabric, especially when the embossing of the first ply is according to continuous straight lines, and at the same time gives the user the sensation of a three-dimensional product, that is, very thick and soft, due to the presence of the shaded decoration printed on the second ply.

According to a particularly advantageous embodiment of the invention, the paper material has a third ply coupled by means of a glue to the first two. The second printed ply is in this case interposed between the first and the third ply and its decoration is visible in transparency at least through the first ply and preferably also through the third ply. The third ply may also advantageously be embossed by means of essentially continuous and straight embossing lines, inclined with respect to a longitudinal edge of the product. This second embossing is generally inclined with respect to the embossing of the first ply, preferably by 90°.

Rather than by essentially continuous lines, the embossing of the third ply may be constituted by parallel alignments of individual protuberances, as may also be provided on the first ply. Said embossing may be constituted by geometrical microembossing according to alignments inclined with respect to the embossing lines of the first ply. The pitch of the protuberances on the single alignment may be equivalent to the pitch according to which the embossing lines or alignments of the protuberances of the first ply are disposed, or with a double or in general multiple pitch with respect to the pitch of the embossing or alignment lines of the embossings of the first ply. As shall be apparent from the description hereunder of some examples of embodiment, this allows the quantity of glue applied to the product to be reduced and thereby a product that is less expensive and above all softer and more pleasing to the touch, less stiff with respect to products obtainable by embossing of the third ply produced along continuous lines that receive glue along the full length of said lines.

In practice, embossing of the first ply may be constituted by lines or by alignments of protuberances that have a width ranging from 0.1 to 2 mm, more preferably from 0.1 and 1 mm and a density ranging from 1.5 and 20 lines per centimeter and preferably between 3 and 20 lines per centimeter. Similar dimensions may be provided for alignments of protuberances or for embossing lines of the third ply.

To obtain particular aesthetic effects, the glue used to couple the plies to one another may be a colored glue. The color of the glue and the color of the print produced on the second ply may be chosen so as to obtain particular optical effects. For example, in a possible embodiment the glue and the ink used to print the second ply are of the same color but different shades, for example, light pink and dark pink, or light red and dark red, or yet again light blue and deep blue or deep blue and dark blue and so forth. The shades may be obtained with a different dilution of dye. In a variant of embodiment, the two colors are different primary colors, so that in the areas in which the glue and ink overlap the product adopts a third color constituted by the combination of two primary colors. For example, yellow and blue may be used as primary colors to obtain yellow, blue and green coloring in the finished product, the green being visible in the areas wherein the glue and the printing ink overlap.

The second ply which, in the preferred embodiment is interposed between the first and the third ply, may be embossed together with the third ply, passing the second and the third ply through a single embossing unit. Alternatively, the second ply may have a relief pattern obtained directly during the ply forming phase, by means of papermaker's fabrics with a particularly coarse grain and/or by means of a TAD drying system, known to those skilled in the art.

According to a different aspect, the invention relates to a method for producing a material of the aforesaid type according to claim 19. Particularly advantageous embodiments of the method according to the invention are indicated in the secondary claims.

### BRIEF DESCRIPTION OF THE DRAWINGS.

The invention shall now be better understood according to the description and accompanying drawing which shows a series of non-limiting preferred embodiments of the invention. More specifically, in the drawings, in which identical or corresponding parts are indicated with the same reference numbers:
Figure 1 shows a diagram of a system to implement the method according to the invention, in a first embodiment;
Figure 2 shows a portion of the product obtainable with the system in Figure 1 with parts removed;
Figures 3 and 4 show portions of the second ply with different printed motifs;
Figure 5 shows a schematic and greatly enlarged section of the product obtained with the system in Figure 1;
Figure 6 again shows a greatly enlarged schematic plan view of a portion of the product in Figure 5;
Figure 7 shows, analogous to Figure 1, a schematic side view of a system to implement the method of the invention, in a second embodiment;
Figure 8 shows a greatly enlarged schematic section of a product obtained with the system in Figure 7;

### Figures 9, 10 and 11 show three diagrams of a system to implement three further embodiments of the method according to the invention; and

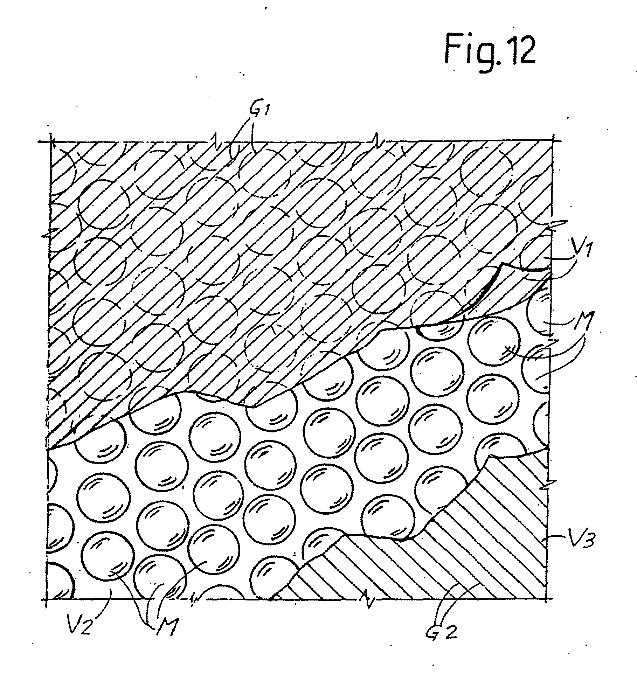

Figure 12 shows a schematic plan view of a product according to another embodiment of the invention.

### DETAILED DESCRIPTION OF PREFERRED EMBODIMENTS OF THE INVENTION

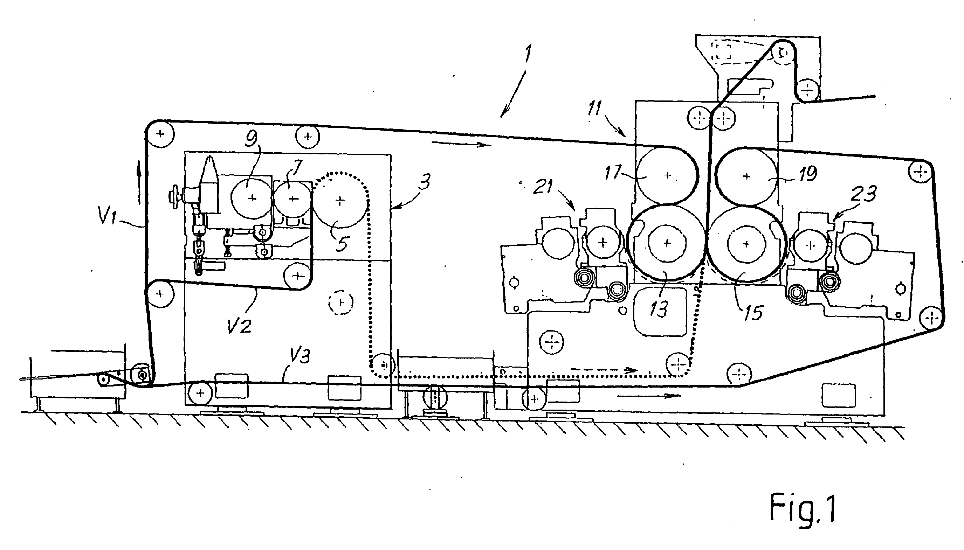

With initial reference to Figure 1, a system to implement the method according to the invention, indicated as a whole with 1, comprises a printing unit 3 with a counter-pressure roller 5 and a cliché roller 7 which receives ink from an inking roller 9.

Disposed downstream of the printing unit 3 is an embossing-laminating unit 11. This comprises a first embossing cylinder 13 and a second embossing cylinder 15, both provided with protuberances with a form that will be described in greater detail hereunder. The embossing rollers 13 and 15 cooperate with respective pressure rollers 17 and 19 coated in rubber or another elastically yielding material. Respective glue dispensers 21 and 23 are associated with the two embossing rollers 13 and 15.

Three plies of paper material, in particular tissue paper, are fed to the system described summarily hereinbefore. More specifically, a first ply V1 is fed, by-passing the printing unit 3, directly to the embossing-laminating unit 11. This ply passes through the nip between the pressure roller 17 and the embossing roller 13 and is embossed therein. Downstream of the nip the protuberances produced thereon are wetted with glue by the glue dispenser 21.

A second ply V2 passes through the printing unit 3 and is printed according to decorative patterns which shall be described hereunder in greater detail. It then passes directly through the nip defined between the embossing rollers 13 and 15.

A third ply V3 is fed directly to the embossing-laminating unit 11, by-passing the printing unit 3. It is driven around the pressure roller 19, passes through the nip between said pressure roller 19 and the embossing roller 15 and is embossed therein. Downstream of the nip between the rollers 15 and 19 the protuberances produced thereon receive a glue dispensed by the dispenser 23. The three plies V1, V2, V3 are then laminated together in the nip between the embossing rollers 13 and 15. Said embossing rollers are disposed with a distance between centers so that the protuberances provided on their surfaces press against each other at the level of the lamination nip between said rollers. This causes the three plies V1, V2 and V3 to adhere by gluing. The distance between the centers of the two rollers 13 and 15 is variable to modify the pressure with which they press against each other. It must be understood that, also as a function of the type of protuberances provided on the two embossing rollers, there may be exact reciprocal or casual correspondence between the protuberances of the two rollers in the lamination nip therebetween.

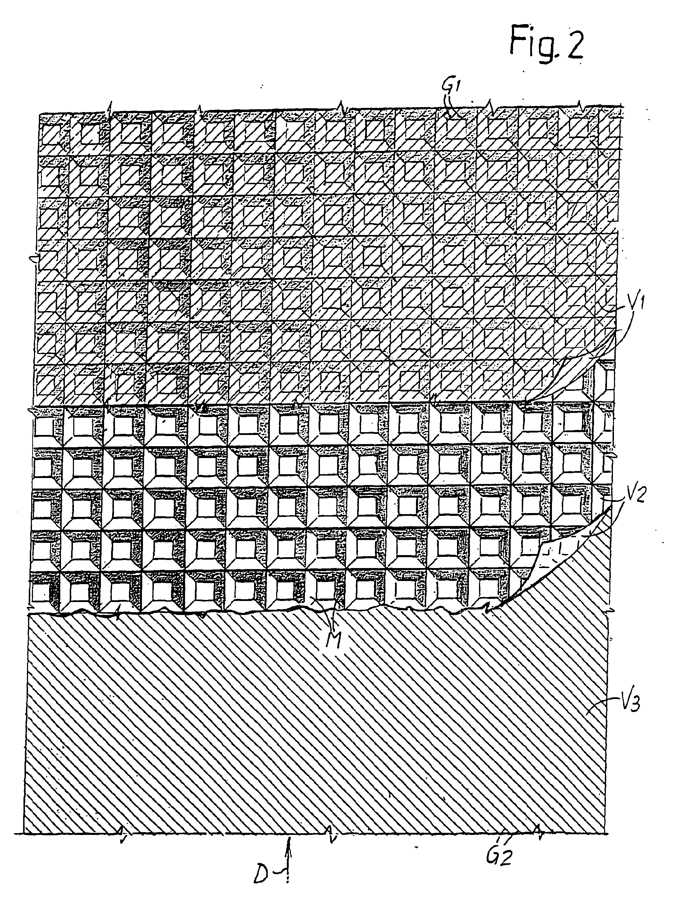

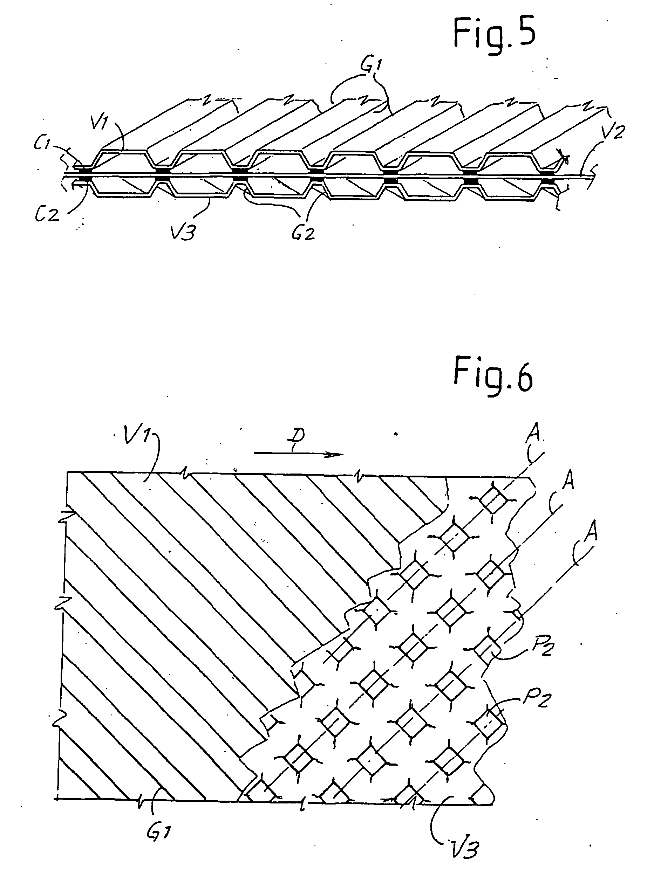

The configuration adopted by the three plies V1, V2 and V3 is shown in particular in Figures 2 and 5. The ply V1 is embossed by the embossing roller 13 in cooperation with the pressure roller 17 according to essentially straight embossing lines, indicated with G1, inclined (in the example shown) by about 45° with respect to the machine direction (arrow D) that is, with respect to the direction of feed of the ply V1 and hence with respect to its longitudinal edges. The embossing lines G1 are formed by protuberances in the form of linear helical ribbings produced on the surface of the roller 13.

The dimension and pitch of these lines is advantageously such that they efficaciously simulate the weft of a woven fabric, and typically the width of the embossing lines G1 ranges from 0.1 to 1 mm, while their density advantageously ranges from 3 to 20 lines per linear centimeter.

The ply V2 is essentially smooth, that is, not embossed, and provided with a printed design, which, in the example shown in Figure 2, simulates three-dimensional embossing constituted by truncated-pyramid shaped protuberances. The three-dimensional effect, that is, the optical effect simulating the relief of the protuberances is obtained by shading the design.

The ply V3 is embossed according to essentially straight lines of embossing G2 constituted, analogous to the lines G1, by protuberances facing the inside of the multi-ply product obtained by the assembly of the three plies V1, V2 and V3. In the example shown, the protuberances or embossing lines G2 have a dimension and density essentially equivalent to those of the embossing lines G1, but are turned through 90° with respect to the latter. However, this is not binding. The dimensions, density and direction of the protuberances of the third ply may even be essentially different from those indicated above.

As can be seen in Figure 5, the plies V1 and V3 are glued by means of a glue C1 and a glue C2 to the intermediate ply V2. The glue C1 is applied by the dispenser 21, while the glue C2 is applied by the dispenser C2. The glue is distributed on the front surfaces of the embossing lines or protuberances G1 and G2 when these are still engaged with the corresponding protuberances of the embossing rollers 13 and 15 which produced them.

The decorative pattern M printed on the ply V2 with the shadings simulating the three-dimensionality of the design is printed with ink, the color of which is chosen to give a particular optical effect in combination with the color of the glue C1 and/or C2. In fact, one or other or both the glues C1, C2 dispensed by the dispensers 21, 23, may be colored. For example, the ink with which the decorative patterns M are printed and the glue or glues C1, C2 may have two shades of the same base color, or may be two primary colors which when combined by superimposition give rise to a third color (i.e. yellow, blue and green).

The overall effect which is obtained is that of a particular soft and thick product with a textile appearance. The production of a printed motif simulating a relief decoration, which constitutes an essential characteristic of the present invention, gives the product a particularly pleasing aesthetic appearance due to the fact that the user perceives the material as if it were much thicker and softer than it actually is and as if it were provided with marked embossing according to the decorative pattern M.

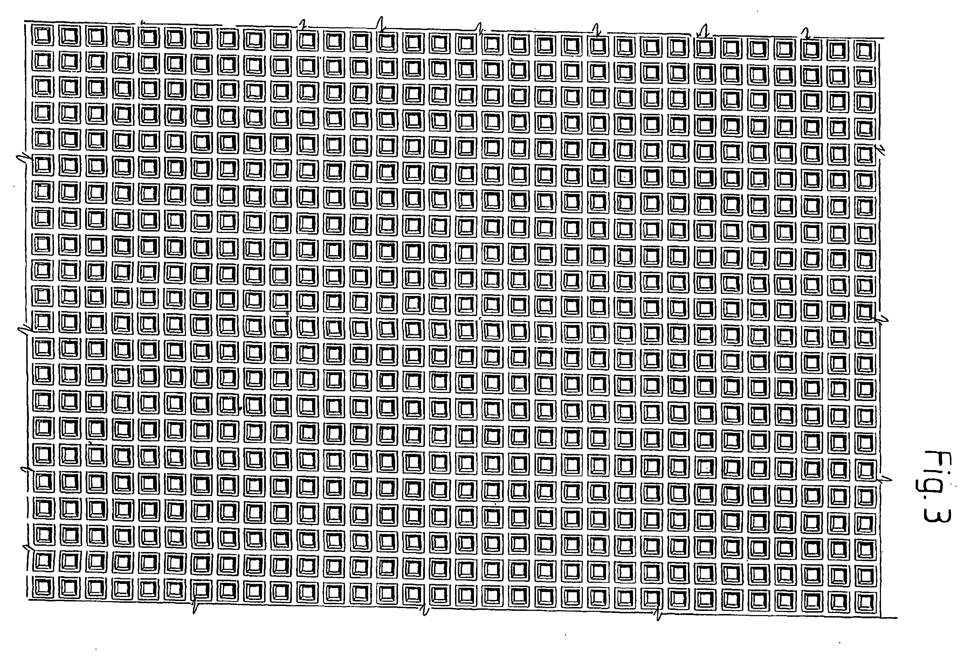

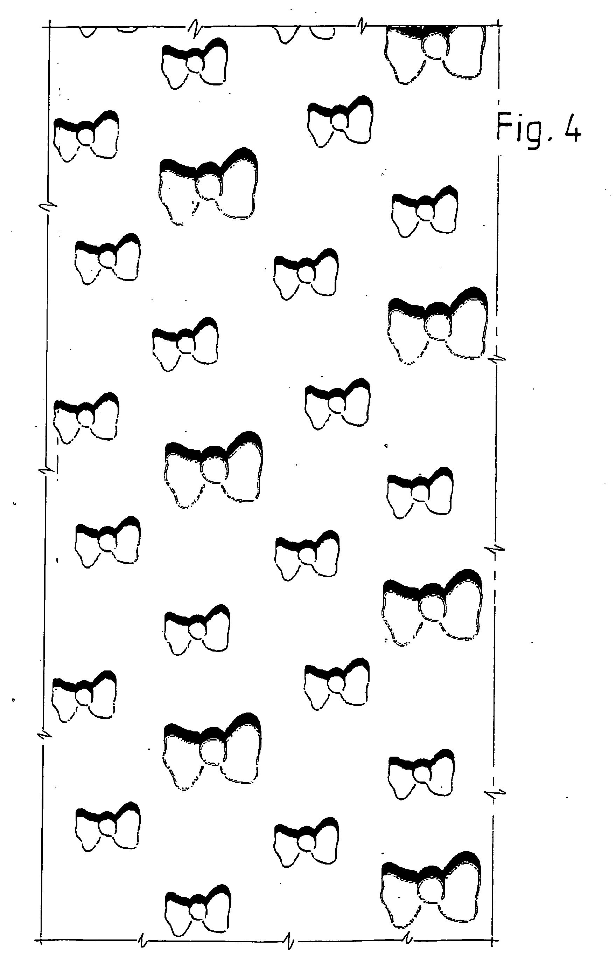

Figures 3 and 4 show decorative patterns simulating a three-dimensionality or relief that may be used alternatively to the pattern M shown in Figure 2 to decorate the intermediate ply V2 of the product. In general, the decorative patterns may be of the geometric and repetitive type, or may be a famcy pattern, or also a combination thereof. They may also be printed in different colors and/or shades and/or characterized by double shading, to simulate double height embossing.

To reduce the quantity of glue applied to the material and thereby make it softer and more flexible, the ply V3 may be embossed according to individual protuberances aligned according to inclined alignments, rather than be embossed according to continuous embossing lines G3. This solution is illustrated schematically in Figure 6, where in a plan view the two outer plies V1 and V3 are shown, while the intermediate ply is omitted for clarity of representation. The ply V1 is once again embossed according to embossing lines G1 inclined with respect to the machine direction D, that is, with respect to a longitudinal edge of the product. However, the underlying outer ply V3 (visible in the area in which the ply V1 and the ply V2 have been removed) has embossing constituted by a series of protuberances P2 with a geometrical form (such as a truncated-pyramid) aligned according to alignments A parallel with one another and turned (in the example shown) through 90° with respect to the embossing line G1 of the ply V1. The protuberances P2 may also be aligned according to other alignments, besides the one identified by the lines A. One of these alignments may be parallel to the embossing lines G1 of the first ply.

The glue C applied by the dispenser 23 is therefore distributed on a surface, represented by the front surface of the protuberances P2, to a much lesser extent to the product in Figure 5, wherein the embossing lines G2 are continuous. The layout of the alignments A may be according to a pitch essentially equivalent to that of the embossing lines G1, while the pitch of the protuberances P2 along each single alignment may be the same as the pitch of the embossing lines G1 or also even half or another multiple or submultiple thereof.

By reducing the number of the protuberances P2, for example increasing their pitch along the alignments A, or also increasing the pitch between contiguous alignments A, the quantity of glue applied between the ply V2 and the ply V3 may be greatly reduced. The exterior appearance deriving from a lesser aesthetic value of the product on the face whereon the ply V3 is visible is not particularly important. In fact, this sheet material is destined in particular to produce products in rolls, such as toilet paper or the like. In these products importance is given above all the aesthetic appearance of the visible face of the material, represented in this case by the outer surface of the upper ply V1. Visible through this is the underlying printed decoration M produced on the intermediate ply V2, which is superimposed on and combined with the aesthetic effect provided by the glue C1 applied on the embossing lines G1. The aesthetic characteristic of the back face of the product, defined by the outer surface of the underlying ply V3, is much less important. Said ply V3 may even by produce with white paper, while the ply V1 may be produced with colored paper; moreover, the glue C2 may also be white and not colored as instead the glue C1 is.

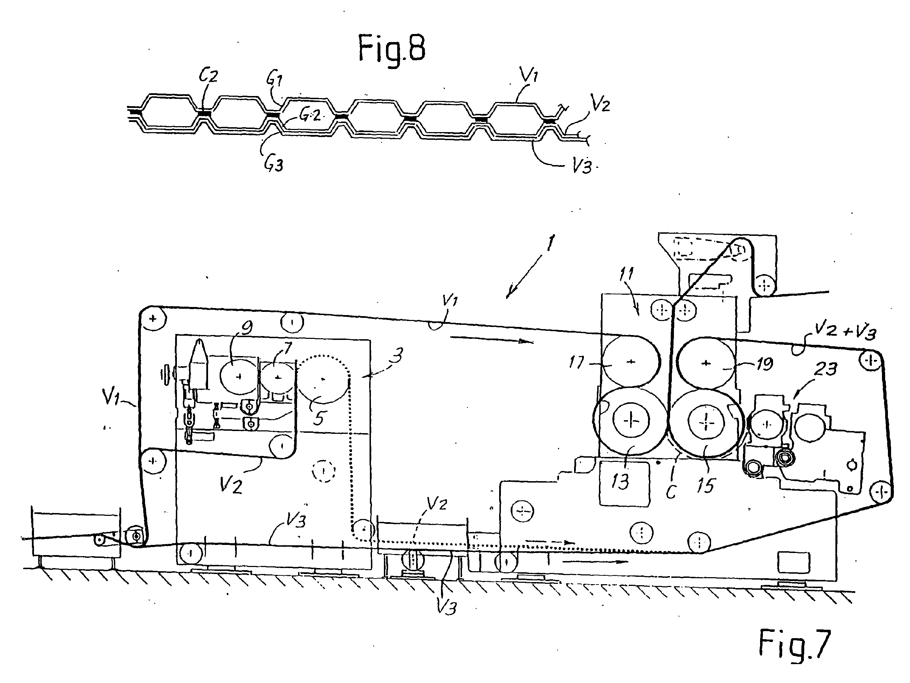

Figure 7 shows, schematically and analogous to Figure 1, a different configuration of a system, indicated once again with 1, for producing material according to the invention. The same numbers indicate parts identical or corresponding to those of the system in Figure 1. The system in Figure 7 differs from the system in Figure 1 essentially due to the fact that a single glue dispenser 23, cooperating with the embossing roller 15, is associated with the embossing-laminating unit 11, while the embossing roller 13 has no glue dispenser.

Moreover, the path of the ply V2 is modified with respect to that of the system in Figure 1. In fact, in this embodiment the ply V2, after having been printed, is combined with the ply V3 before being fed to the embossing-laminating roller 11. The plies V2 and V3 are then fed together into the embossing nip defined between the embossing roller 15 and the pressure roller 19. These plies are embossed together with an embossing pattern defined by the protuberances provided on the embossing roller 15. For example, they may be embossed according to embossing lines G2 (Fig. 5) or according to isolated embossing protuberances like the protuberances P2 (Figure 6). The ply V1 is instead fed, as in the case in Figure 1, through the embossing nip defined between the pressure roller 17 and the embossing roller 13.

The product that is obtained is represented somewhat schematically in Figure 8. The plies V2 and V3 have linear embossing protuberances G3 and G2 which are nested inside one another. The glue C2 dispensed by the dispenser 23 is applied to the front surface of the embossing protuberances G3 formed on the ply V2. In the lamination nip between the embossing rollers 13 and 15 the glue - besides coupling the plies V1 and V2 - leaks through the fibers forming the ply V2 in a quantity sufficient to guarantee reciprocal bonding between the plies V2 and V3.

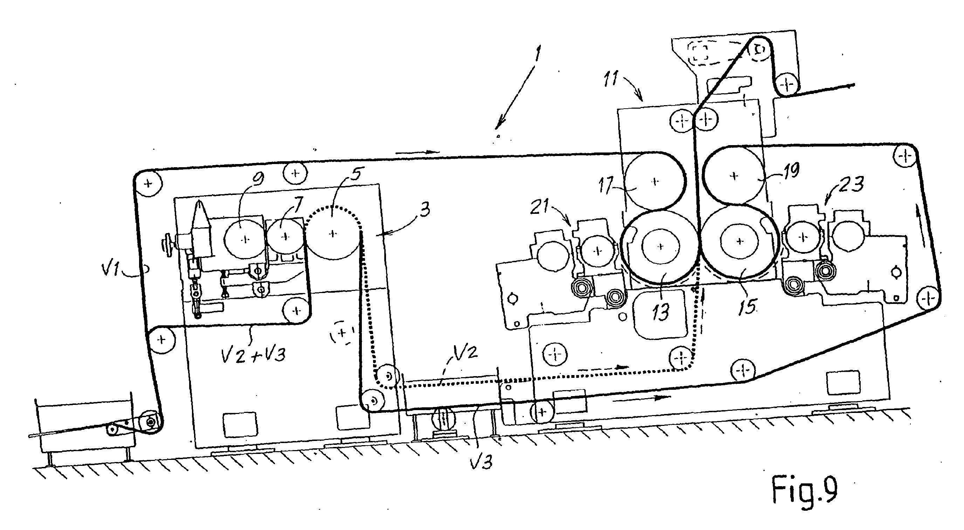

Figure 9 shows a further configuration of the system to implement the method in a different embodiment. The same numbers indicate parts identical or corresponding to those of the system shown in Figure 1.

The system differs from the system in Figure 1 due to the fact that the plies V2 and V3 are fed together through the printing unit 3 and are separated downstream thereof to be fed one through the lamination nip between the rollers 13 and 15 while the other is first fed through the embossing roller between the rollers 19 and 15 and subsequently through the lamination nip between the rollers 13 and 15. The product that is obtained is essentially equivalent to the one shown in Figure 5 or in Figure 6.

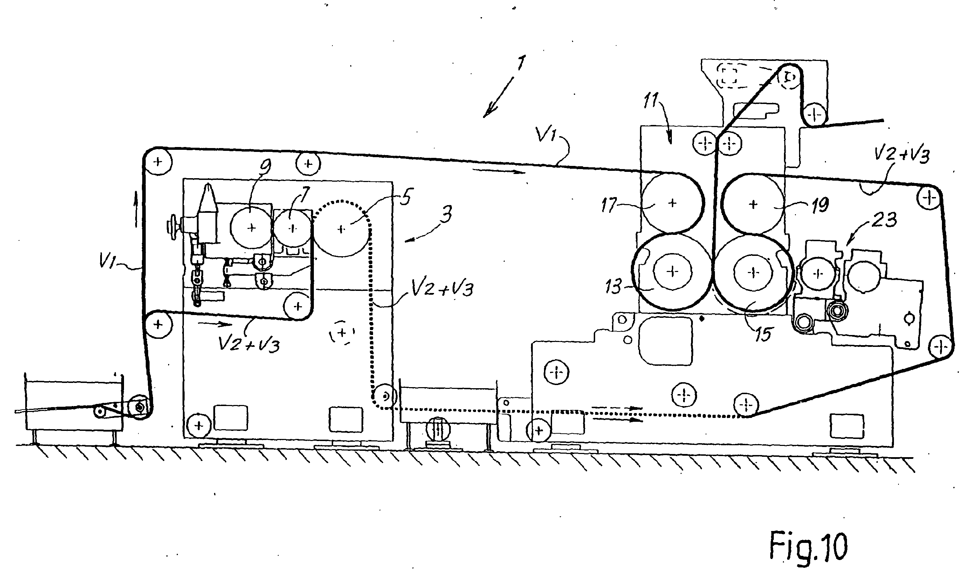

Figure 10 shows a modified embodiment of the system to implement the method according to the invention. Also in this case the same numbers indicate parts identical or equivalent to those of the example shown in Figure 1.

The system in Figure 10 differs from the system in Figure 1 due to the fact that the plies V2 and V3 are fed in parallel through the printing unit 3 and also through the embossing nip between the rollers 15 and 19. They are thus embossed together as in the example in Figure 7. The material obtained is therefore analogous to the one shown in Figure 8. The glue is dispensed from a single dispenser 23, contrary to the system in Figure 1, said dispenser being combined with the embossing roller 15.

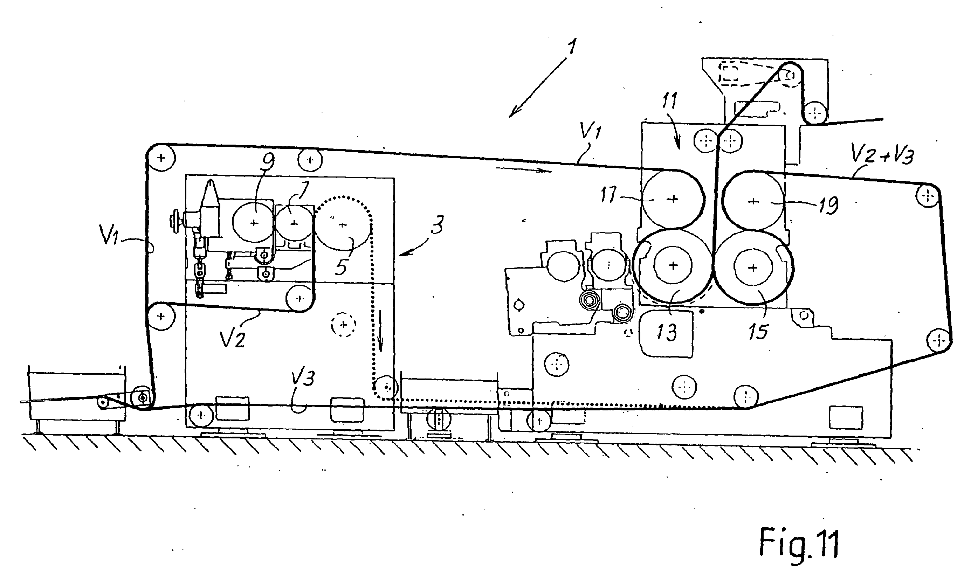

Finally, Figure 11 shows yet another configuration of the system to implement the method according to the invention. The same numbers indicate parts identical or equivalent to those in the previous embodiments. Once printed the ply V2 is combined with the ply V3 and the two plies V2 and V3 are fed through the embossing nip between the pressure roller 19 and the embossing roller 15 to be embossed together and thus obtain, after lamination with the previously embossed ply V1, a material with a structure equivalent to the one shown in Figure 8. A single glue dispenser 21 is associated with the embossing-laminating unit 11, cooperating in this case with the embossing roller 13.

The product produced according to the present invention, besides the advantages mentioned above, also has the advantage of keeping the colored glue and/or printing ink confined inside the product, while the outer plies V1 and V3 may be free of ink. This avoids contamination towards the outside, a particularly important characteristic when the product is destined to come into contact with the body. Moreover, the fact that the outer plies are white allows a noteworthy reduction in costs. Therefore, they seem colored by the effect of the internal ink and the colored glue, without having the drawbacks of colored plies.

In the examples shown, the ply V2 is printed on the face facing the ply V1 which, in the finished product (for example a product in roll form) constitutes the outer ply. Nonetheless, it would also be possible to print the opposite face.

Although in the examples illustrated the product is always constituted by three plies, it must be understood that certain advantages of the present invention are also obtained with the use of only two plies, or that the products may be formed or more than three plies, that is one or other of the plies V1, V2 and V3 may be constituted in turn by more than one layer. The configurations illustrated in Figures 1, 7, 9, 10 and 11, in particular, may be adopted to produce a product formed of only two plies. In the configurations in Figures 1 and 9 the ply V2 remains unembossed, while in the configurations in Figures 7, 10 and 11 the ply V2 is embossed.

It is understood that the drawing purely shows an example provided solely as a practical layout of the invention, which may vary in forms and layouts without however departing from the scope of the concept on which the invention is based.

## Claims

1. A sheet of paper material comprising at least a first ply and a second ply, coupled to each other by means of a glue, wherein said first ply has a first embossing in a direction according to at least an alignment, and the second ply is printed with a decorative pattern, **characterized in that** the decorative pattern has shading simulating a relief three-dimensional design, visible in transparency through said first ply.

2. Material as claimed in claim 1, **characterized in that** said alignment is inclined with respect to a longitudinal edge of said material.

3. Material as claimed in claim 1 or 2, **characterized in that** said first ply is embossed according to essentially continuous embossing lines.

4. Material as claimed in claim 1 or 2 or 3, **characterized in that** the embossing lines of the first ply are essentially straight.

5. Material as claimed in any one of the previous claims, **characterized in that** said decorative pattern simulates an embossing.

6. Material as claimed in one or more of the previous claims, **characterized in that** it comprises a third ply coupled by gluing to said first and to said second ply, said second ply being interposed between the first ply and the third ply.

7. Material as claimed in claim 6, **characterized in that** said third ply has a second embossing preferiably disposed according to a direction inclined with respect to the longitudinal edge of the material and not parallel to the lines of said first embossing on the first ply.

8. Material as claimed in claim 7, **characterized in that** said second embossing is constituted by essentially continuous lines.

9. Material as claimed in claim 7 **characterized in that** said second embossing is constituted by alignments parallel with one another, and preferably inclined with respect to said longitudinal edge, of essentially geometrical protuberances.

10. Material as claimed in claim 7, **characterized in that** said essentially geometric protuberances have along said alignments a pitch substantially the same as the pitch of said lines forming the first embossing or a multiple or submultiple of said pitch.

11. Material as claimed in one or more of the previous claims, **characterized in that** said lines of the first embossing have a width ranging from 0.1 to 2 mm, and preferably from 0.1 to 1 mm and a density ranging from 1.5 and 20 lines per cm and preferably from 3 to 20 lines per cm.

12. Material as claimed in claim 8; **characterized in that** said essentially continuous lines forming the second embossing have a width ranging from 0.1 to 2 mm, and preferably from 0.1 to 1 mm and a density ranging from 1.5 to 20 lines per cm and preferably from 3 to 20 lines per cm.

13. Material as claimed in claim 8 and 11, **characterized in that** said essentially continuous lines forming the second embossing have a width ranging from 0.1 to 2 mm, and preferably from 0.1 to 1 mm and a density ranging from 1.5 to 20 lines per cm and preferably from 3 to 20 lines per cm.

14. Material as claimed in claim 9, **characterized in that** said parallel alignments forming the second embossing have a density ranging from 1.5 to 20 alignments per cm and preferably from 3 to 20 alignments per cm.

15. Material as claimed in one or more of the previous claims, **characterized in that** said glue is colored.

16. Material as claimed in claim 15, **characterized in that** said decorative pattern has a color essentially the same as the color of said glue.

17. Material as claimed in claim 15 or 16, **characterized in that** said pattern has a different shade of the color of said glue.

18. Material as claimed in claim 15, **characterized in that** said decorative pattern has a first primary color and said glue has a second primary color, the material having the color obtained by combining said first and said second primary color in the areas in which the decorative pattern and the glue are superimposed.

19. Material as claimed in one or more claims 6 to 18, **characterized in that** said second and third ply are embossed together.

20. A method to produce a web paper material comprising at least a first ply and a second ply coupled to each other by a glue, wherein said first ply is embossed according to a first embossing along at least an alignment, and the second ply is printed with a decorative pattern, **characterized in that** the decorative pattern has shading simulating a relief three-dimensional design, visible in transparency through the first ply.

21. Method as claimed in claim 20, **characterized in that** said alignment is inclined with respect to a longitudinal edge of said material.

22. Method as claimed in claim 21, **characterized in that** said first ply is embossed according to essentially continuous lines.

23. Method as claimed in claim 22, **characterized in that** said lines are essentially straight.

24. Method as claimed in claim 21, 22 or 23, **characterized in that** said decorative pattern simulates an embossing.

25. Method as claimed in one or more of claims 21 to 24, **characterized in that** a third ply is coupled by gluing to said first and to said second ply, said second ply being interposed between the first ply and the third ply.

26. Method as claimed in claim 25, **characterized in that** said third ply is embossed according to embossing preferably disposed according to a direction inclined with respect to the longitudinal edge of the material and not parallel to the lines of said first embossing on the first ply.

27. Method as claimed in claim 26, **characterized in that** said second embossing is constituted by essentially continuous lines.

28. Method as claimed in claim 26, **characterized in that** said second embossing is constituted by alignments parallel with one another and preferably inclined with respect to said longitudinal edge, of essentially geometrical protuberances.

29. Method as claimed in claim 26, **characterized in that** said essentially geometrical protuberances have along said alignments a pitch more or less the same as the pitch of said lines forming the first embossing or a multiple or submultiple of said pitch.

30. Method as claimed in one or more of claims 21 to 29, **characterized in that** said lines of the first embossing have a width ranging from 0.1 to 2 mm, and preferably from 0.1 to 1 mm and a density ranging from 1.5 and 20 lines per cm and preferably from 3 to 20 lines per cm.

31. Method as claimed in claim 27, **characterized in that** said essentially continuous lines forming the second embossing have a width ranging from 0.1 to 2 mm, and preferably from 0.1 to 1 mm and a density ranging from 1.5 to 20 lines per cm and preferably from 3 to 20 lines per cm.

32. Method as claimed in claim 27, **characterized in that** said essentially continuous lines forming the second embossing have a width ranging from 0.1 to 2 mm, and preferably from 0.1 to 1 mm and a density ranging from 1.5 to 20 lines per cm and preferably from 3 to 20 lines per cm.

33. Method as claimed in claim 28, **characterized in that** said parallel alignments forming the second embossing have a density ranging from 1.5 to 20 alignments per cm and preferably from 3 to 20 alignments per cm.

34. Method as claimed in one or more of claims 21 to 33, **characterized in that** said glue is colored.

35. Method as claimed in claim 35, **characterized in that** said decorative pattern has a color essentially the same as the color of said glue.

36. Method as claimed in claim 34 or 35, **characterized in that** said pattern has a different shade of the color of said glue.

37. Method as claimed in claim 34, **characterized in that** said decorative pattern has a first primary color and said glue has a second primary color, the material having the color obtained by combining said first and said second primary color in the areas in which the decorative pattern and the glue are superimposed.

38. Method as claimed in one or more of claims 25 to 37, **characterized in that** said second and third ply are embossed together.

## Patentansprüche

1. Blatt aus Papiermaterial, umfassend wenigstens eine erste Lage und eine zweite Lage, welche Lagen miteinander mittels eines Klebers verbunden sind, wobei die erste Lage eine erste Prägung in einer Orientierung entsprechend wenigstens einer Ausrichtung aufweist und die zweite Lage mit einem dekorativen Muster bedruckt ist, **dadurch gekennzeichnet, dass** das dekorative Muster eine ein dreidimensionalen Reliefdesign vortäuschende Schattierung aufweist, die in Durchsicht durch die erste Lage sichtbar ist.

2. Material nach Anspruch 1, **dadurch gekennzeichnet, dass** die Ausrichtung in Bezug auf einen Längsrand des Materials geneigt verläuft.

3. Material nach Anspruch 1 oder 2, **dadurch gekennzeichnet, dass** die erste Lage entsprechend im Wesentlichen durchgehender Prägereihen geprägt ist.

4. Material nach Anspruch 1, 2 oder 3, **dadurch gekennzeichnet, dass** die Prägereihen der ersten Lage im Wesentlichen gerade verlaufen.

5. Material nach einem der vorhergehenden Ansprüche, **dadurch gekennzeichnet, dass** das dekorative Muster eine Prägung vortäuscht.

6. Material nach einem oder mehreren der vorhergehenden Ansprüche, **dadurch gekennzeichnet, dass** es eine dritte Lage umfasst, die mit der ersten und zweiten Lage durch ein Kleben verbunden ist, wobei die zweite Lage zwischen der ersten und der dritten Lage angeordnet ist.

7. Material nach Anspruch 6, **dadurch gekennzeichnet, dass** die dritte Lage eine zweite Prägung aufweist, die vorzugsweise in einer bezüglich des Längsrandes des Materials geneigten Orientierung und nicht parallel zu den Reihen der ersten Prägung der ersten Lage angeordnet ist.

8. Material nach Anspruch 7, **dadurch gekennzeichnet, dass** die zweite Prägung im Wesentlichen durch fortlaufende Reihen gebildet wird.

9. Material nach Anspruch 7, **dadurch gekennzeichnet, dass** die zweite Prägung durch zueinander parallele und vorzugsweise bezüglich des Längsrandes geneigte Ausrichtungen von im Wesentlichen geometrischen Ausstülpungen gebildet wird.

10. Material nach Anspruch 7, **dadurch gekennzeichnet, dass** die im Wesentlichen geometrischen Ausstülpungen entlang der Ausrichtungen einen im Wesentlichen gleichen Abstand wie den Abstand der die erste Prägung bildenden Reihen, einen mehrfachen Abstand dieses Abstands oder einen Teil dieses Abstands aufweisen.

11. Material nach einem oder mehreren der vorhergehenden Ansprüche, **dadurch gekennzeichnet, dass** die Reihen der ersten Prägung eine Breite im Bereich von 0,1 bis 2 mm, vorzugsweise von 0,1 bis 1 mm, und eine Dichte im Bereich von 1,5 bis 20 Reihen pro cm, vorzugsweise von 3 bis 20 Reihen pro cm, aufweisen.

12. Material nach Anspruch 8, **dadurch gekennzeichnet, dass** die im Wesentlichen durchgehenden, die zweite Prägung bildenden Reihen eine Breite im Bereich von 0,1 bis 2 mm, vorzugsweise von 0,1 bis 1 mm, und eine Dichte im Bereich von 1,5 bis 20 Reihen pro cm, vorzugsweise von 3 bis 20 Reihen pro cm, aufweisen.

13. Material nach den Ansprüchen 8 und 11, **dadurch gekennzeichnet, dass** die die zweite Prägung bildenden, im Wesentlichen durchgehenden Reihen eine Breite im Bereich von 0,1 bis 2 mm, vorzugsweise von 0,1 bis 1 mm, und eine Dichte im Bereich von 1,5 bis 20 Reihen pro cm, vorzugsweise von 3 bis 20 Reihen pro cm, aufweisen.

14. Material nach Anspruch 9, **dadurch gekennzeichnet, dass** die die zweite Prägung bildenden parallelen Ausrichtungen eine Dichte im Bereich von 1,5 bis 20 Ausrichtungen pro cm, vorzugsweise von 3 bis 20 Ausrichtungen pro cm, aufweisen.

15. Material nach einem oder mehreren der vorhergehenden Ansprüche, **dadurch gekennzeichnet, dass** der Kleber gefärbt ist.

16. Material nach Anspruch 15, **dadurch gekennzeichnet, dass** das dekorative Muster eine im Wesentlichen der Farbe des Klebers entsprechende Farbe aufweist.

17. Material nach Anspruch 15 oder 16, **dadurch gekennzeichnet, dass** das Muster eine unterschiedliche Schattierung der Farbe des Klebers aufweist.

18. Material nach Anspruch 15, **dadurch gekennzeichnet, dass** das dekorative Muster eine erste Grundfarbe und der Kleber eine zweite Grundfarbe aufweisen, wobei das Material eine durch eine Kombination der ersten und der zweiten Grundfarbe erhaltene Farbe in den Bereichen aufweist, in denen das dekorative Muster und der Kleber überlagert sind.

19. Material nach einem oder mehreren der Ansprüche 6 bis 18, **dadurch gekennzeichnet, dass** die erste und die dritte Lage miteinander geprägt sind.

20. Verfahren zum Herstellen einer Papiermaterialbahn, umfassend wenigstens eine erste Lage und eine zweite Lage, welche Lagen miteinander mittels eines Klebers verbunden sind, wobei die erste Lage entsprechend einer ersten Prägung entlang wenigstens einer Ausrichtung geprägt und die zweite Lage mit einem dekorativen Muster bedruckt wird, **dadurch gekennzeichnet, dass** das dekorative Muster eine ein dreidimensionalen Reliefdesign vortäuschende Schattierung aufweist, die in Durchsicht durch die erste Lage sichtbar ist.

21. Verfahren nach Anspruch 20, **dadurch gekennzeichnet, dass** die Ausrichtung in Bezug auf einen Längsrand des Materials geneigt verläuft.

22. Verfahren nach Anspruch 21, **dadurch gekennzeichnet, dass** die erste Lage entsprechend im Wesentlichen durchgehender Reihen geprägt ist.

23. Verfahren nach Anspruch 22, **dadurch gekennzeichnet, dass** die Reihen im Wesentlichen gerade verlaufen.

24. Verfahren nach Anspruch 21, 22, oder 23, **dadurch gekennzeichnet, dass** das dekorative Muster eine Prägung vortäuscht.

25. Verfahren nach einem oder mehreren der Ansprüche 21 bis 24, **dadurch gekennzeichnet, dass** eine dritte Lage mit der ersten und zweiten Lage durch ein Kleben verbunden wird, wobei die zweite Lage zwischen der ersten und der dritten Lage angeordnet wird.

26. Verfahren nach Anspruch 25, **dadurch gekennzeichnet, dass** die dritte Lage entsprechend einer Prägung geprägt wird, die vorzugsweise in einer bezüglich des Längsrandes des Materials geneigten Orientierung und nicht parallel zu den Reihen der ersten Prägung der ersten Lage angeordnet ist.

27. Verfahren nach Anspruch 26, **dadurch gekennzeichnet, dass** die zweite Prägung im Wesentlichen durch fortlaufende Reihen gebildet wird.

28. Verfahren nach Anspruch 26, **dadurch gekennzeichnet, dass** die zweite Prägung durch zueinander parallele und vorzugsweise bezüglich des Längsrandes geneigte Ausrichtungen von im Wesentlichen geometrischen Ausstülpungen gebildet wird.

29. Verfahren nach Anspruch 26, **dadurch gekennzeichnet, dass** die im Wesentlichen geometrischen Ausstülpungen entlang der Ausrichtungen einen mehr oder weniger gleichen Abstand wie den Abstand der die erste Prägung bildenden Reihen, einen mehrfachen Abstand dieses Abstands oder einen Teil dieses Abstands aufweisen.

30. Verfahren nach einem oder mehreren der Ansprüche 21 bis 29, **dadurch gekennzeichnet, dass** die Reihen der ersten Prägung eine Breite im Bereich von 0,1 bis 2 mm, vorzugsweise von 0,1 bis 1 mm, und eine Dichte im Bereich von 1,5 bis 20 Reihen pro cm, vorzugsweise von 3 bis 20 Reihen pro cm, aufweisen.

31. Verfahren nach Anspruch 27, **dadurch gekennzeichnet, dass** die im Wesentlichen durchgehenden, die zweite Prägung bildenden Reihen eine Breite im Bereich von 0,1 bis 2 mm, vorzugsweise von 0,1 bis 1 mm, und eine Dichte im Bereich von 1,5 bis 20 Reihen pro cm, vorzugsweise von 3 bis 20 Reihen pro cm, aufweisen.

32. Verfahren nach Anspruch 27, **dadurch gekennzeichnet, dass** die die zweite Prägung bildenden, im Wesentlichen durchgehenden Reihen eine Breite im Bereich von 0,1 bis 2 mm, vorzugsweise von 0,1 bis 1 mm, und eine Dichte im Bereich von 1,5 bis 20 Reihen pro cm, vorzugsweise von 3 bis 20 Reihen pro cm, aufweisen.

33. Verfahren nach Anspruch 28, **dadurch gekennzeichnet, dass** die die zweite Prägung bildenden parallelen Ausrichtungen eine Dichte im Bereich von 1,5 bis 20 Ausrichtungen pro cm, vorzugsweise von 3 bis 20 Ausrichtungen pro cm, aufweisen.

34. Verfahren nach einem oder mehreren der Ansprüche 21 bis 33, **dadurch gekennzeichnet, dass** der Kleber gefärbt wird.

35. Verfahren nach Anspruch 34, **dadurch gekennzeichnet, dass** das dekorative Muster eine im Wesentlichen der Farbe des Klebers entsprechende Farbe aufweist.

36. Verfahren nach Anspruch 34 oder 35, **dadurch gekennzeichnet, dass** das Muster eine unterschiedliche Schattierung der Farbe des Klebers aufweist.

37. Verfahren nach Anspruch 34, **dadurch gekennzeichnet, dass** das dekorative Muster eine erste Grundfarbe und der Kleber eine zweite Grundfarbe aufweisen, wobei das Material eine durch eine Kombination der ersten und der zweiten Grundfarbe erhaltene Farbe in den Bereichen aufweist, in denen das dekorative Muster und der Kleber überlagert sind.

38. Material nach einem oder mehreren der Ansprüche 25 bis 37, **dadurch gekennzeichnet, dass** die erste und die dritte Lage miteinander geprägt werden.

## Revendications

1. Feuille de matériau de papier comprenant au moins une première couche et une deuxième couche, accouplées l'une à l'autre au moyen d'une colle, dans laquelle ladite première couche comporte un premier gaufrage dans une direction selon au moins un alignement, et la deuxième couche est imprimée avec un motif décoratif, **caractérisée en ce que** le motif décoratif comporte un ombrage simulant un dessin tridimensionnel en relief, visible en transparence à travers ladite première couche.

2. Matériau selon la revendication 1, **caractérisé en ce que** ledit alignement est incliné par rapport à un bord longitudinal dudit matériau.

3. Matériau selon la revendication 1 ou 2, **caractérisé en ce que** ladite première couche est gaufrée selon des lignes de gaufrage essentiellement continues.

4. Matériau selon la revendication 1 ou 2 ou 3, **caractérisé en ce que** les lignes de gaufrage de la première couche sont essentiellement droites.

5. Matériau selon une quelconque des revendications précédentes, **caractérisé en ce que** ledit motif décoratif simule un gaufrage.

6. Matériau selon une ou plusieurs des revendications précédentes, **caractérisé en ce qu'**il comprend une troisième couche accouplée par collage auxdites première et deuxième couches, ladite deuxième couche étant interposée entre la première couche et la troisième couche.

7. Matériau selon la revendication 6, **caractérisé en ce que** ladite troisième couche comporte un second gaufrage disposé de préférence selon une direction inclinée par rapport au bord longitudinal du matériau et non parallèle aux lignes dudit premier gaufrage sur la première couche.

8. Matériau selon la revendication 7, **caractérisé en ce que** ledit second gaufrage est constitué par des lignes essentiellement continues.

9. Matériau selon la revendication 7 **caractérisé en ce que** ledit second gaufrage est constitué par des alignements parallèles les uns aux autres, et de préférence inclinés par rapport audit bord longitudinal, de protubérances essentiellement géométriques.

10. Matériau selon la revendication 7, **caractérisé en ce que** lesdites protubérances essentiellement géométriques possèdent, le long desdits alignements, un pas sensiblement identique au pas desdites lignes formant le premier gaufrage ou un multiple ou sous-multiple dudit pas.

11. Matériau selon une ou plusieurs des revendications précédentes, **caractérisé en ce que** lesdites lignes du premier gaufrage possèdent une largeur allant de 0,1 à 2 mm, et de préférence de 0,1 à 1 mm et une densité allant de 1,5 et 20 lignes par cm et de préférence de 3 à 20 lignes par cm.

12. Matériau selon la revendication 8, **caractérisé en ce que** lesdites lignes essentiellement continues formant le second gaufrage possèdent une largeur allant de 0,1 à 2 mm, et de préférence de 0,1 à 1 mm et une densité allant de 1,5 à 20 lignes par cm et de préférence de 3 à 20 lignes par cm.

13. Matériau selon la revendication 8 et 11, **caractérisé en ce que** lesdites lignes essentiellement continues formant le second gaufrage possèdent une largeur allant de 0,1 à 2 mm, et de préférence de 0,1 à 1 mm et une densité allant de 1,5 à 20 lignes par cm et de préférence de 3 à 20 lignes par cm.

14. Matériau selon la revendication 9, **caractérisé en ce que** lesdits alignements parallèles formant le second gaufrage possèdent une densité allant de 1,5 à 20 alignements par cm et de préférence de 3 à 20 alignements par cm.

15. Matériau selon une ou plusieurs des revendications précédentes, **caractérisé en ce que** ladite colle est colorée.

16. Matériau selon la revendication 15, **caractérisé en ce que** ledit motif décoratif comporte une couleur essentiellement identique à la couleur de ladite colle.

17. Matériau selon la revendication 15 ou 16, **caractérisé en ce que** ledit motif comporte une nuance différente de la couleur de ladite colle.

18. Matériau selon la revendication 15, **caractérisé en ce que** ledit motif décoratif comporte une première couleur primaire et ladite colle comporte une seconde couleur primaire, le matériau possédant la couleur obtenue en associant lesdites première et seconde couleurs primaires dans les zones dans lesquelles le motif décoratif et la colle sont superposés.

19. Matériau selon une ou plusieurs des revendications 6 à 18, **caractérisé en ce que** lesdites deuxième et troisième couches sont gaufrées ensemble.

20. Procédé pour produire un matériau de papier en bande comprenant au moins une première couche et une deuxième couche accouplées l'une à l'autre par une colle, dans lequel ladite première couche est gaufrée selon un premier gaufrage le long d'au moins un alignement, et la deuxième couche est imprimée avec un motif décoratif, **caractérisé en ce que** le motif décoratif comporte un ombrage simulant un dessin tridimensionnel en relief, visible en transparence à travers la première couche.

21. Procédé selon la revendication 20, **caractérisé en ce que** ledit alignement est incliné par rapport à un bord longitudinal dudit matériau.

22. Procédé selon la revendication 21, **caractérisé en ce que** ladite première couche est gaufrée selon des lignes essentiellement continues.

23. Procédé selon la revendication 22, **caractérisé en ce que** lesdites lignes sont essentiellement droites.

24. Procédé selon la revendication 21, 22 ou 23, **caractérisé en ce que** ledit motif décoratif simule un gaufrage.

25. Procédé selon une ou plusieurs des revendications 21 à 24, **caractérisé en ce qu'**une troisième couche est accouplée par collage auxdites première et deuxième couches, ladite deuxième couche étant interposée entre la première couche et la troisième couche.

26. Procédé selon la revendication 25, **caractérisé en ce que** ladite troisième couche est gaufrée selon un gaufrage de préférence disposé selon une direction inclinée par rapport au bord longitudinal du matériau et non parallèle aux lignes dudit premier gaufrage sur la première couche.

27. Procédé selon la revendication 26, **caractérisé en ce que** ledit second gaufrage est constitué par des lignes essentiellement continues.

28. Procédé selon la revendication 26, **caractérisé en ce que** ledit second gaufrage est constitué par des alignements parallèles les uns aux autres, et de préférence inclinés par rapport audit bord longitudinal, de protubérances essentiellement géométriques.

29. Procédé selon la revendication 26, **caractérisé en ce que** lesdites protubérances essentiellement géométriques possèdent, le long desdits alignements, un pas plus ou moins identique au pas desdites lignes formant le premier gaufrage ou un multiple ou sous-multiple dudit pas.

30. Procédé selon une ou plusieurs des revendications 21 à 29, **caractérisé en ce que** lesdites lignes du premier gaufrage possèdent une largeur allant de 0,1 à 2 mm, et de préférence de 0,1 à 1 mm et une densité allant de 1,5 à 20 lignes par cm et de préférence de 3 à 20 lignes par cm.

31. Procédé selon la revendication 27, **caractérisé en ce que** lesdites lignes essentiellement continues formant le second gaufrage possèdent une largeur allant de 0,1 à 2 mm, et de préférence de 0,1 à 1 mm et une densité allant de 1,5 à 20 lignes par cm et de préférence de 3 à 20 lignes par cm.

32. Procédé selon la revendication 27, **caractérisé en ce que** lesdites lignes essentiellement continues formant le second gaufrage possèdent une largeur allant de 0,1 à 2 mm, et de préférence de 0,1 à 1 mm et une densité allant de 1,5 à 20 lignes par cm et de préférence de 3 à 20 lignes par cm.

33. Procédé selon la revendication 28, **caractérisé en ce que** lesdits alignements parallèles formant le second gaufrage possèdent une densité allant de 1,5 à 20 alignements par cm et de préférence de 3 à 20 alignements par cm.

34. Procédé selon une ou plusieurs des revendications 21 à 33, **caractérisé en ce que** ladite colle est colorée.

35. Procédé selon la revendication 35, **caractérisé en ce que** ledit motif décoratif comporte une couleur essentiellement identique à la couleur de ladite colle.

36. Procédé selon la revendication 34 ou 35, **caractérisé en ce que** ledit motif comporte une nuance différente de la couleur de ladite colle.

37. Procédé selon la revendication 34, **caractérisé en ce que** ledit motif décoratif comporte une première couleur primaire et ladite colle comporte une seconde couleur primaire, le matériau possédant la couleur obtenue en associant lesdites première et seconde couleurs primaires dans les zones dans lesquelles le motif décoratif et la colle sont superposés.

38. Procédé selon une ou plusieurs des revendications 25 à 37, **caractérisé en ce que** lesdites deuxième et troisième couches sont gaufrées ensemble.
